# EUROPEAN PATENT APPLICATION

(11) **EP 0 862 340 A1**
(43) Date of publication of application: **02.09.1998**
(21) Application number: 97941185.7
(22) Date of filing: 17.09.1997
(51) Int. Cl.: H04N 13/02

(54) **IMAGE SIGNAL PROCESSOR**

(30) Priority: 17.09.1996 JP 244726/96; 30.06.1997 JP 174073/97
(71) Applicant: Imard K.K., Tokyo 166 (JP)
(72) Inventor: KAWAMURA, Yasuhiro, Tokyo 191 (JP)
(74) Representative: Godsill, John Kenneth
(86) International application number: JP9703277
(87) International publication number: WO9812879

(57) **Abstract**

An image signal processor which produces three-dimensional image signals from input image signals of one line has a 1st memory (15) into which the input image signals are written at a 1st speed and from which the input image signals are read at a 2nd speed faster than the 1st speed, a 2nd memory (16) which writes the image signals of sequential fields which are read from the 1st memory (15) into sequential field memories and reads sequentially the image signals of the fields which are delayed by a preset number n (n is a natural number) of fields, a 3rd memory (18) which has at least a pair of field memories and stores the image signals from the 1st memory (15) in one of the field memories and stores the image signals from the 2nd memory in the other field memory, and memory controllers (4, 9, 10 and 20) which control the writing and reading operations of the 1st, 2nd and 3rd memories (15, 16 and 18) and outputs non-delayed image signals and delayed image signals alternately at a double-speed. The image signals outputted from the 3rd memory (18) are displayed on a monitor and the non-delayed image and the delayed image are observed with the left and right eyes respectively through three-dimensional image observing glasses. The left and right image signals for the three-dimensional observation can be produced from the input image signals of one line which are obtained by imaging an object while the object and the imaging device are relatively moved horizontally. A three-dimensional observation system can be constructed at a low cost.

## Description

### Technical Field

The present invention relates to an image signal processing apparatus for processing an input image signal derived by picking- up an image of an object to be picked-up by an image pick-up device, while the object and image pick-up device are moved relative to each other, and deriving an output image signal for displaying a stereoscopic image.

### Background Art

There has been proposed a stereoscopic image display system, in which an object is picked-up by right-eye and left-eye image pick-up devices to derive right-eye and left-eye image signals having a parallax, these right-eye and left-eye image signals are displayed on right-eye and left-eye display devices to display right-eye image and left-eye image, respectively, and these right-eye and left-eye images are exclusively monitored by right-eye and left-eye of a user. In another known stereoscopic image display system, the right-eye and left-eye image signals derived from the right-eye and left-eye image pick-up devices are composed in a field or frame sequence to produce a stereoscopic image signal, and then the composed stereoscopic image signal is displayed on a single display device having a polarizing filter provided on a screen thereof. In such a system, the displayed image is monitored by means of a polarizing glasses.

However, the known stereoscopic image display systems require the right-eye and left-eye image signals having a given parallax, and this necessitates the use of two image pick-up devices, and in the former system, two image display devices are required. In this manner, a whole system is liable to be complicated in construction.

The present invention has for its object to provide a less expensive image signal processing apparatus, in which the above mentioned drawbacks of the known stereoscopic image display system can be mitigated by obviating the necessity of using the two image pick-up devices and two image display devices.

### Disclosure of Invention

To this end, an image signal processing apparatus according to the invention comprises:
a first memory means for storing an input image signal at a first rate and reading the stored input image signal at a second rate which is higher than said first rate to derive a non-delayed image signal;
a second memory means including a plurality of field memories for storing the non-delayed image signal read out of said first memory means, and reading successively the thus stored non-delayed image signal with a delay which corresponds to a period of a predetermined number n (n being an integer number) of fields to derive a delayed image signal;
a third memory means including at least two field memories, one for storing the non-delayed image signal read out of said first memory means and the other for storing said delayed image signal read out of said second memory means; and
memory controlling means for controlling said first, second and third memory means on the basis of said input image signal to derive a stereoscopic image signal from said third memory means.

In a preferable embodiment of the image signal processing apparatus according to the invention, said number n of fields by which said delayed image signal is delayed with respect to the non-delayed image signal can be set at will. By adjusting said number n of fields, a feeling of stereoscopic vision upon monitoring the displayed image can be adjusted.

In another preferable embodiment of the invention, there is provided an image processor for processing at least one of the input image signal, non-delayed image signal, delayed image signal and stereoscopic image signal.

In another preferable embodiment of the invention, at least said first, second and third memory means are constituted by using a rewritable record medium such as a hard disc drive. Then, the image processing apparatus may be installed in a personal computer.

### Brief Description of Drawings

Fig. 1 is a block diagram showing a first embodiment of the image signal processing apparatus according to the invention;
Figs. 2A, 2B and 2C are timing charts explaining the operation of the apparatus shown in Fig. 1;
Figs. 3A-3F are timing charts representing the operation of the apparatus;
Fig. 4 is a schematic view expressing a delay ring memory RM illustrated in Fig. 1;
Fig. 5 is a schematic view depicting a shot memory SM shown in Fig. 1;
Figs. 6A-6D are timing charts explaining the operation of the apparatus shown in Fig. 1;
Figs. 7A-7C are timing charts expressing the operation of the apparatus of Fig. 1;
Fig. 8 is a block diagram illustrating a major part of a line interpolation circuit shown in Fig. 1;
Fig. 9 is a block diagram showing an embodiment of the stereoscopic image display system using the signal processing apparatus according to the invention;
Figs. 10A and 10B are perspective views showing embodiments of the image signal source shown in Fig. 9; and
Fig. 11 is a block diagram illustrating a second embodiment of the image signal processing apparatus according to the invention.

### Best Mode for Carrying Out the Invention

Now the image signal processing apparatus according to the invention will be explained with reference to embodiments shown in the drawings.

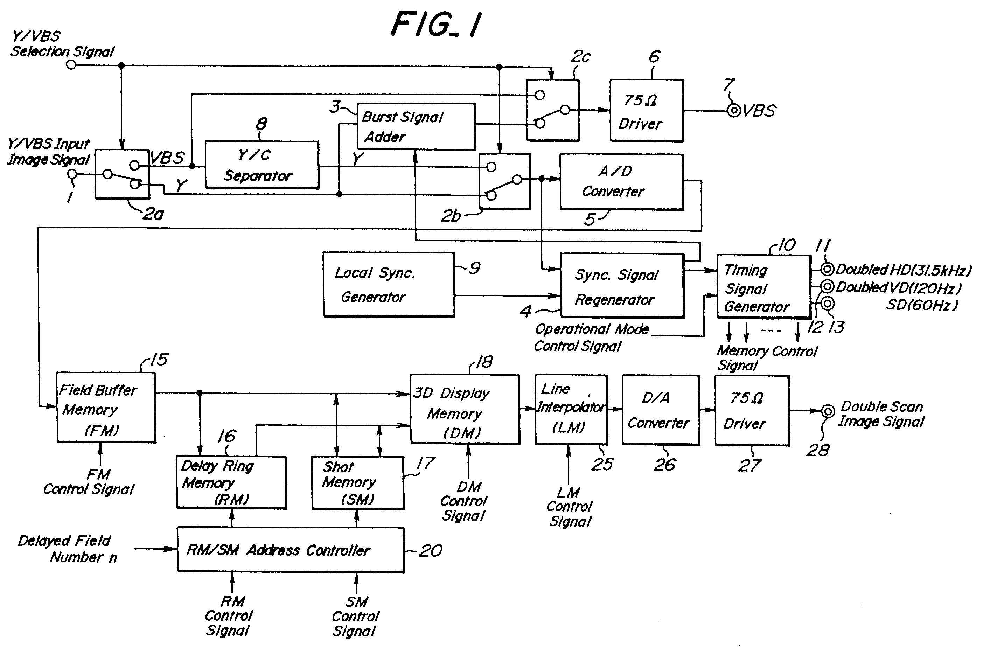

Fig. 1 is a block diagram showing a first embodiment of the image signal processing apparatus according to the invention. In this embodiment, the apparatus comprises an input terminal 1 for receiving an input image signal in the form of a brightness signal Y or a composite signal VBS. When the brightness signal Y is applied to the input terminal 1, the brightness signal is supplied to a burst signal adding circuit 3 via a switching circuit 2a as well as to a synchronizing signal regenerating circuit 4 and an A/D converter 5 via a switching circuit 2b. In the burst signal adding circuit 3, a color burst signal produced by the synchronizing signal regenerating circuit 4 is added to the input brightness signal Y. An output signal from the burst signal adding circuit 3 is supplied to an VBS output terminal 7 through a switching circuit 2c and a 75 Ω driver 6.

When the composite color signal VBS is applied to the input terminal 1, this signal is supplied to a Y/C separating circuit 8 by means of the switching circuit 2a as well as to the VBS output terminal 7 through the switching circuit 2c and 75 Ω driver 6. In the Y/C separating circuit 8, a brightness signal Y is separated from the input composite signal VBS, and the thus separated brightness signal Y is supplied to the synchronizing signal regenerating circuit 4 and A/D converter 5 via the switching circuit 2b. It should be noted that the switching circuits 2a-2c are controlled by an Y/VBS selection signal which is generated by a control panel not shown in response to a selecting operation of a user for determining an input image signal to be supplied to the input terminal 1.

In addition to the brightness signal Y, to the synchronizing signal regenerating circuit 4, is also supplied a synchronizing signal generated by a local synchronizing signal generator 9. It should be noted that if the input image signal is based on, for instance NTSC standard system, the synchronizing signal generated by the generator 9 has to be based on the NTSC standard system. In the synchronizing signal regenerating circuit 4, it is first judged whether or not the input brightness signal contains a composite synchronizing signal. When the brightness signal contains the composite synchronizing signal, the synchronizing signal regenerating circuit 4 generates a given clock pulse on the basis of the composite synchronizing signal. On the other hand, when the input brightness signal does not contain the composite synchronizing signal, the synchronizing signal regenerating circuit 4 generates the clock pulse on the basis of the synchronizing signal supplied from the local synchronizing signal generator 9. The thus generated clock signal is supplied to a timing signal generating circuit 10. The synchronizing signal regenerating circuit 4 further generates the color burst signal which is supplied to the burst signal adding circuit 3 explained above.

In the timing signal generating circuit 10, various memory control signals on the basis of the clock signal supplied from the synchronizing signal regenerating circuit 4 and an operational mode control signal which indicates an operational mode such as the three-dimensional (3D) moving picture display mode and 3D still picture display mode, said operational mode control signal being supplied from the control panel. The timing signal generating circuit 10 further generates a horizontal synchronizing or driving signal HD having a frequency (31.5 KHz) which is higher by two times than a normal horizontal synchronizing signal of the NTSC standard system, a vertical synchronizing or driving signal VD having a frequency (120 Hz) which is also a double of a normal vertical synchronizing frequency, and a shutter driving signal SD having a frequency of 60 Hz. These signals HD, VD and SD are supplied to HD signal, VD signal and SD signal output terminals 11, 12 and 13, respectively.

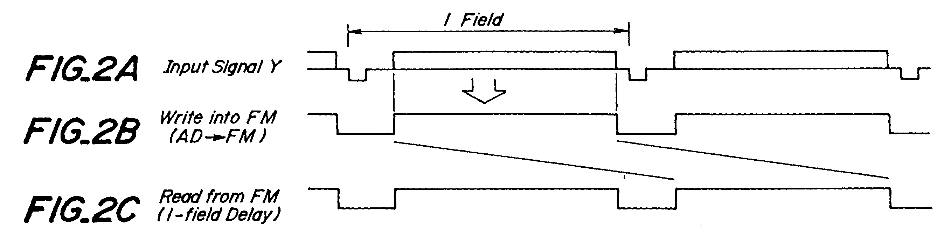

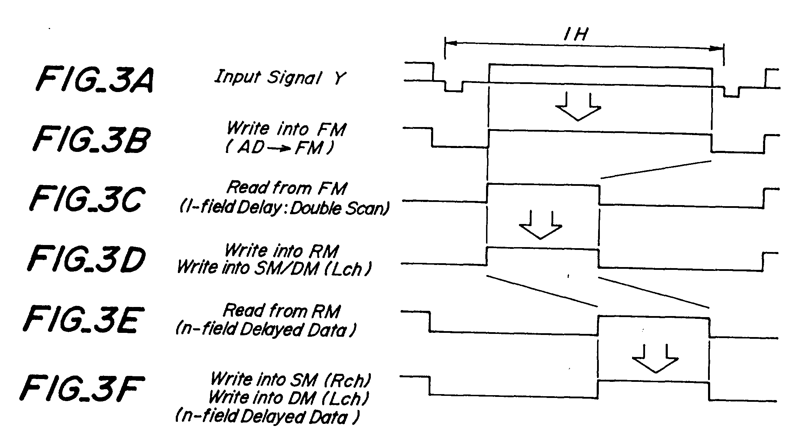

The brightness signal Y supplied to the A/D converter 5 is converted into a digital brightness signal, and the thus converted digital brightness signal is stored in a field buffer memory (FM) 15. In this FM 15, the digital brightness signal derived from the A/D converter 5 is stored in synchronism with the operation of the A/D converter as illustrated in timing charts of Figs. 2A and 2B, and the stored brightness signal is read out with a delay of one field period as shown in Fig. 2C. The digital brightness signal is read out of FM 15 at a rate which is a double of the writing clock as shown in timing charts of Figs. 3A-3C. Therefore, the reading out operation is completed within a first half period of one line period H (see Fig. 3C). In this manner, the time axis compression is carried out.

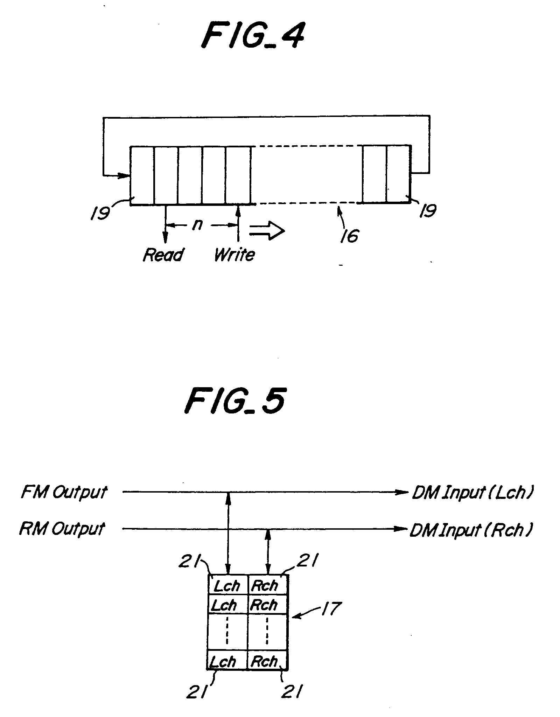

The digital brightness signal Y read out of the FM 15 is supplied, on one hand, to a delay ring memory (RM) 16 as a right-eye digital image signal (Rch signal), and on the other hand, to shot memory (SM) 17 and double scan conversion 3D display memory (DM) 18 as a left-eye digital image signal (Lch signal). As shown in Fig. 4, RM 16 comprises a plurality of field memories, in an example shown 32 fields memories 19 which are connected as a ring. Writing/reading addresses for RM 16 are controlled by an RM/SM address control circuit 20 in accordance with the memory control signal supplied from the timing signal generating circuit 10 and the number n of the delayed fields which is set arbitrarily by controlling the control panel.

That is to say, the image signals of successive fields read out of FM 15 are written into successive field memories 19 (Fig. 3D), and at the same time the image signals of successive fields which are delayed by the predetermined number n of fields with respect to the currently written image signal are read out of RM 16 (Fig. 3E). The reading out operation is carried out within a last half period of respective horizontal scanning periods H. The image signal read out of RM 16 is supplied to SM 17 and DM 18 as the right-eye image signal (Fig. 3F).

SM 17 stores right-eye and left-eye image signals for displaying a stereoscopic still picture and comprises eight pairs of field memories, i.e. 16 field memories 21 as shown in Fig. 5, each pair storing image signals of one still picture. For this purpose, the write/read address of SM 16 is controlled by the RM/SM address control circuit 20 in such a manner that image signals on successive lines of a left-eye image signal of one field derived from FM 15 are stored in one of a pair of field memories within first half periods of successive horizontal scanning periods H, image signals on successive lines of a right-eye image signal of one field which is derived from RM 16 and is delayed by n fields with respect to the left-eye image signal are stored in the other field memory of the relevant pair within second half periods of successive horizontal scanning periods H, and the stored image signals of right-eye and left-eye image signals for one field are read out selectively, the read out image signals being supplied to DM 18 (Fig. 3F).

In the present embodiment, DM 18 comprises four field memories, two for one frame (two fields) of left-eye image and two for one frame (two fields) of right-eye image. Under the control of the memory control signals from the timing signal generating circuit 10, the right-eye and left-eye image signals of two fields are alternately written into and read out of DM 18 such that the image signals from FM 15 and RM 16 or the image signals from SM 17 are written or read out in accordance with the selected operation mode.

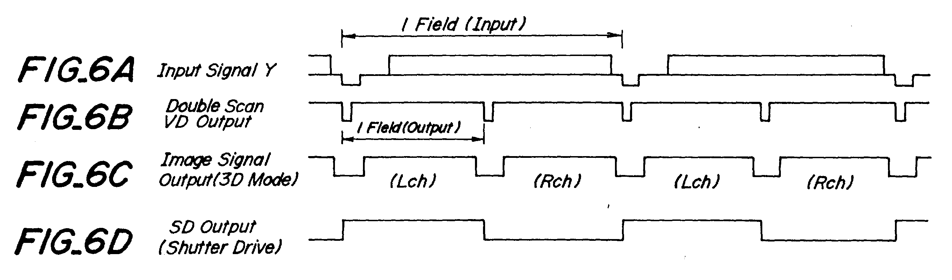

That is to say, when the 3D operational mode is selected, image signals of successive lines from FM 15 are written into the left-eye field memory of DM 18 within a first half of successive line periods, and image signals of successive lines of the n-field delayed field from RM 16 are written into the right-eye field memory of DM 16 within a last half of successive field periods. At the same time, the image signals previously stored in the left-eye field memory and the n-field delayed image signals previously stored in the right-eye field memory are read out in a field sequence as shown in Figs. 6A-6C.

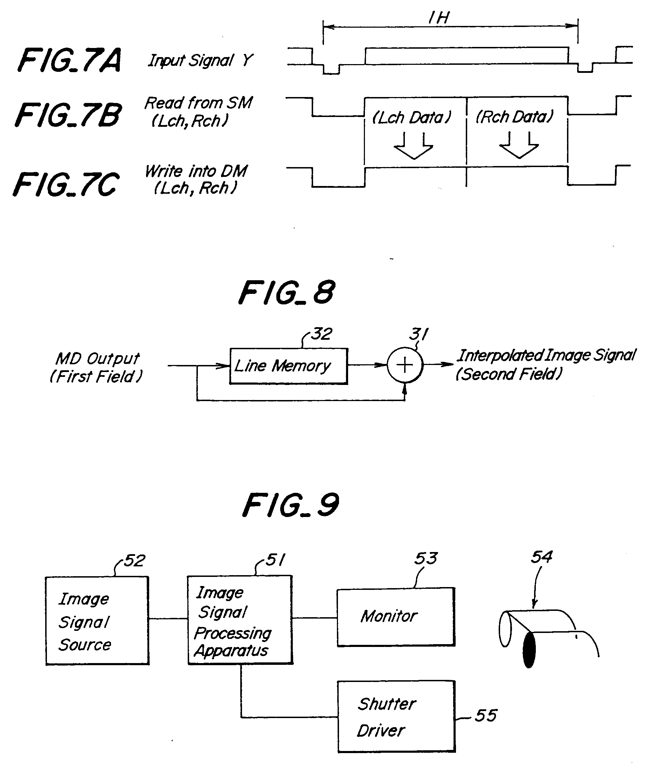

When the 3D still picture display operation mode is selected, upon a freezing operation of a user, image signals of successive lines from the left-eye field memory of SM 17 are written into the left-eye field memory of DM 18 within a first half of successive line periods, and image signals of successive lines of the n-field delayed field from the right-eye field memory of SM 17 are written into the right-eye field memory of DM 16 within a last half of successive field periods. After that, the image signals stored in the left-eye field memory and the n-field delayed image signals stored in the right-eye field memory are read out in a field sequence as shown in Figs. 7A-7C. As stated above, since SM 17 includes eight field memory pairs, it is possible to store the image signals of eight frames after the freezing operation, and thus any one of image signals may be selectively displayed by operating the control panel.

The image signal read out of DM 18 is supplied via a line interpolation circuit 25 to a D/A converter 26 and is converted into an analog image signal. The thus converted analog image signal is supplied via a 75 Ω driver 27 to an image signal output terminal 28. It should be noted that this output image signal has horizontal and vertical scanning frequencies which are higher than the normal horizontal and vertical scanning frequencies by two times. In this manner, the 3D display memory 18 performs the double scan converter.

The line interpolation circuit 25 is operated only when the 3D still picture display mode is selected. In this mode of operation, if image signals of odd and even fields of one frame picture of the moving picture are displayed as a still picture, a moving object might be shifted between the odd and even fields and could not be seen clearly. Therefore, in the present embodiment, the image signals stored in the left-eye and right-eye field memories are alternately read out in a repeated fashion as explained above. However, when the image signal of only one field is used in this manner, the vertical resolution might be deteriorated.

In the present embodiment, in the still picture display mode, an image signal of a second field is formed from the image signal of one field (first field) read out of DM 18 in the line interpolation circuit 25, and the first field image signal and the interpolated second field image signal are alternately supplied to the D/A converter 26. In this manner, the vertical resolution can be improved.

Fig. 8 shows an embodiment of the line interpolator 25. The image signal of the first field read out of DM 18 is supplied to one input of an adder 31 as well as to a line memory 32. An output signal of the line memory 32 is supplied to the other input terminal of the adder 31. Timings of the writing and reading operation are controlled by the control signals supplied from the timing signal generating circuit 10 such that the interpolated image signal of the second field can be obtained.

In the manner explained above, in the present embodiment, the left-eye and right-eye image signals at the output terminal 28 with a double scan rate are supplied to a single monitor and are displayed thereon. The displayed left-eye image is monitored by a left-eye of a user and the right-eye image is exclusively seen by the right-eye, then the monitor can see the stereoscopic image.

Fig. 9 shows an embodiment of the stereoscopic image display system comprising the above mentioned image signal processing apparatus according to the invention generally shown by a reference numeral 51. The input terminal of the image signal processing apparatus 51 is connected to an image signal input terminal of an image signal supply source 52 comprising video apparatuses such as video tape recorder and video camera. In the present invention, when an object whose stereoscopic image is to be displayed is picked-up by a video camera, the object and video camera are moved relatively in the horizontal direction.

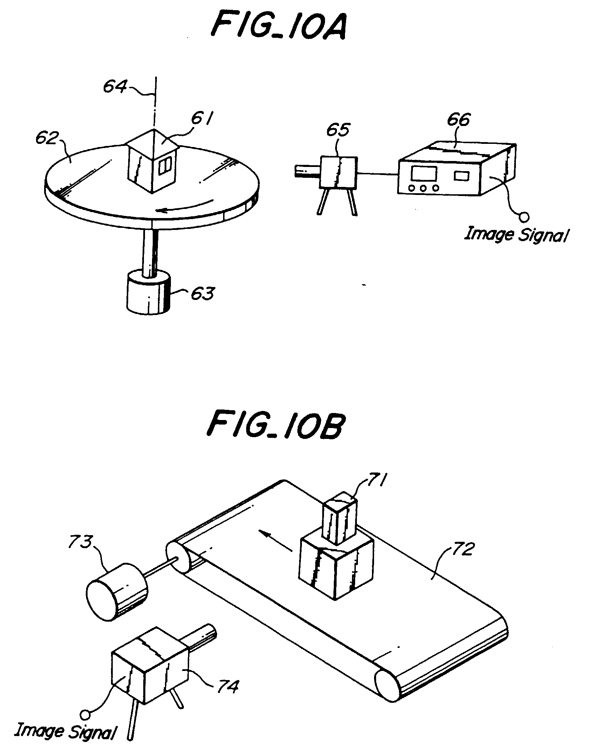

Fig. 10A illustrates an embodiment of the image signal source 52. In this embodiment, an object 61 is placed on a turntable 62 which is rotated by a motor 63 about a vertical axis 64 at a given angular velocity, while the image of the object 61 is picked-up by a video camera 65 which is arranged stationarily. An image signal generated by the video camera 65 is supplied to a video tape recorder 66.

Fig. 10B depicts another embodiment of the image signal source according to the invention. In the present embodiment, an object 71 to be picked-up is placed on a belt conveyer 72 which is moved horizontally at a given linear speed by means of a motor 73. The object 71 is picked-up by a video camera 74 which is arranged beside the belt conveyer 72. An image signal generated by the video camera 74 is directly supplied to the image signal processing apparatus 51. It should be noted that in the present embodiment, the image signal from the video camera may be once stored in a video tape recorder or may be supplied to the image signal processing apparatus 51 by means of any suitable video processor.

As illustrated in Fig. 9, the output signals supplied from the image signal processing apparatus 51, i.e. the HD signal from the HD signal output terminal 11, VD signal from the VD signal output terminal 12 and image signal from the image signal output terminal 28, are supplied to corresponding input terminals of a monitor 53. Left-eye image and right-eye image alternately displayed on the monitor 53 at the double scan rate are seen with the aid of polarizing glasses 54.

The SD signal appearing at the SD signal output terminal 13 of the image signal processing apparatus 51 (Fig. 6D) is supplied to a synchronizing signal input terminal of a shutter driving device 55 to produce a shutter driving signal in synchronism with the SD signal. The thus produced shutter driving signal is transmitted to the polarizing glasses 54 by infrared radiation or electromagnetic radiation. By means of the shutter driving signal, liquid crystal shutters for right-eye and left-eye provided in the glasses 54 are controlled such that these shutters are alternately opened and closed.

In the manner explained above, by watching the right-eye and left-eye images alternately displayed on the monitor 53 exclusively by the right-eye and left-eye with the aid of the polarizing glasses 54, the user can see the stereoscopic still picture or moving picture. When the VBS output terminal 7 of the image signal processing apparatus 51 is connected to a monitor not shown, a two dimensional (2D) image may be seen in accordance with the image signal from the image signal output apparatus 52. Moreover, when the object is rotated, a feeling of depth of the monitored three-dimensional image can be controlled by inverting the polarity of the shutter driving signal SD.

As explained above, by processing the single image signal obtained by picking-up an object by relatively moving the object and the image pick-up camera, it is possible to monitor the three-dimensional image as the moving picture or still picture. Therefore, the three-dimensional image display system can be made simple. For instance, when a cut surface of jewel is to be checked, a jewel is placed on the turntable and is rotated thereon, while the image of the jewel is picked-up by the video camera arranged stationarily as illustrated in Fig. 10A.

Moreover, the image signal processing apparatus according to the invention may be advantageously applied to the checking of metal welded portion. In this case, an X-ray image pick-up camera is arranged fixedly and a welded portion is moved with respect to the camera. Then, the three-dimensional image of the welded portion can be monitored, and thus the welded portion as well as non-welded portion can be checked accurately and easily. Further, in the medical field, a patient is picked-up by an X-ray camera while the camera is moved with respect to the patient having a contrast agent injected therein. In this manner, the positional relationship of blood vessels of the patient can be monitored as the three-dimensional image, which is very helpful for diagnosis and cure.

In the above embodiment, the number n of delayed fields upon reading the field signal from RM 16 can be adjusted at will with the aid of the control panel, the feeling of stereoscopic vision (three-dimensional effect) can be easily controlled.

Moreover, in the above explained embodiment, the synchronizing signal is generated by the local synchronizing signal generating circuit 9 and the necessary signals are produced on the basis of this locally generated synchronizing signal. Therefore, even if the synchronizing signal contained in the input image signal is not accurate, it is always possible to obtain the image signal for the stereoscopic image display. Therefore, the stereoscopic image display system can be realized at a relatively low cost. In order to derive an accurate NTSC signal from the X-ray image pick-up camera generally used in the non-destructive detection and medial site, it is required to use expensive time base corrector (TBC) and down-converter. However, in the present embodiment, since the accurate synchronizing signal is generated, it is possible to process the input image signal having a disturbed synchronizing signal or having no color burst signal. Therefore, it is possible to use a conventional cheap down-converter.

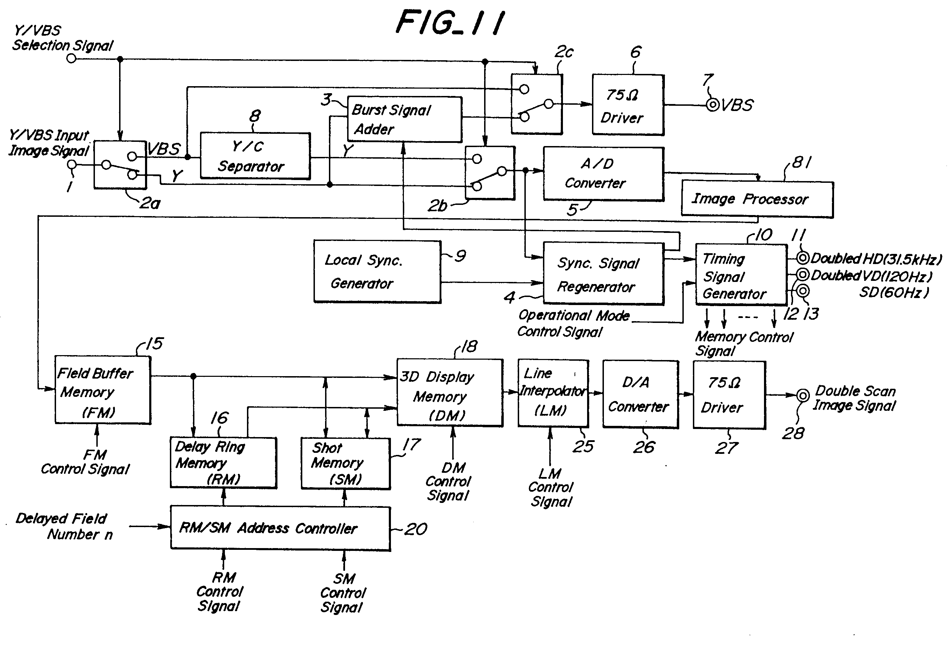

Fig. 11 is a block diagram showing a second embodiment of the image signal processing apparatus according to the invention. This embodiment differs from the first embodiment only in a point that an image processor 81 for performing the γ correction is arranged between the A/D converter 5 and the field buffer memory 15. The operation of the image processor 18 can be controlled by means of the control panel.

In the present embodiment, by suitably operating the image processor 81, it is possible to selectively display stereoscopic images having corrected γ and non-corrected γ, and these images can be easily compared with each other in addition to the merits of the first embodiment.

The present invention is not limited to the embodiments explained above, but many alternations and modifications may be conceived by those skilled in the art within the scope of the invention. In the above embodiments, the image signal of NTSC system is processed, but according to the invention, it is also possible to process any kinds of image signals such as PAL image signal, and a compressed image signal such as MPEG. Further, the field memory FM 15 may be replaced by a line memory. Also in this case, the compression on time can be performed.

DM 18 may be formed by two field memories instead of sixteen field memories. In this case, the image signal from FM 15 or one channel signal from SM 17 is stored in one field memory, and the image signal from RM 16 or the other channel signal from SM 17 is stored in the other field memory. Also in this case, the decrease in the vertical resolution can be prevented by the line interpolation circuit 25 like as the 3D still picture display mode.

In the above embodiments, the right-eye and left-eye image signals for the 3D still picture display are stored in SM 17 at a field unit. According to the invention, these image signals may be stored at frame unit. In this case, since the vertical resolution is not decreased, the line interpolation circuit 25 may be omitted. Furthermore, the image signals stored in SM 17 may be supplied to a computer by means of a SCSI cable.

It should be noted that by operating the control panel, not only the 3D moving and still picture display modes, but also 2D moving picture and still picture display modes may be controlled. In the 2D moving picture display mode, one field memory in DM 18 for the L-channel or R-channel may be read out repeatedly. In the above embodiments, the brightness signal Y is outputted from the 75Ω driver 27 to the image signal output terminal 28, but according to the invention, the 75Ω driver may produce R, G and B color signals.

In the second embodiment, the image processor 81 is operated selectively, but it may be operated continuously. Further, the image processor 81 may be provided at the output of the field buffer memory 15 or at the output of the 3D display memory 18. Moreover, the process executed by the image processor 81 is not limited to the gamma correction, but any other process such as Fourier transformation, image interpolation and image compression may be performed. If the image compression is executed, the compression is carried out between the A/D converter 5 and the field buffer memory 15 and the decomposition is performed between the 3D display memory 18 and the D/A converter 26.

In the above embodiments, all memories in the field buffer memory 15, delay ring memory 16, shot memory 17, 3D display memory 18 and line interpolation circuit 25 may be constructed by a single rewritable record medium such as a hard disc drive (HDD). Then, the whole image signal processing apparatus according to the invention may be simply installed in a personal computer. In this manner, a cost of the image processing apparatus as well as the whole image display system can be further decreased.

### Industrial Applicability

As explained above in detail, according to the invention, the right-eye and left-eye image signals necessary for displaying the stereoscopic image can be produced from the single input image signal, and therefore the stereoscopic image display system can be realized at a low cost.

## Claims

1. An image signal processing apparatus comprising:
a first memory means for storing an input image signal at a first rate and reading the stored input image signal at a second rate which is higher than said first rate to derive a non-delayed image signal;
a second memory means including a plurality of field memories for storing the non-delayed image signal read out of said first memory means, and reading successively the thus stored non-delayed image signal with a delay time which corresponds to a period of a predetermined number n (n being an integer number) of fields to derive a delayed image signal;
a third memory means including at least two field memories, one for storing the non-delayed image signal read out of said first memory means and the other for storing said delayed image signal read out of said second memory means; and
memory controlling means for controlling said first, second and third memory means on the basis of said input image signal to derive a stereoscopic image signal from said third memory means.

2. An apparatus according to claim 1, wherein said number n of the fields by which said delayed image signal is delayed with respect to the non-delayed image signal can be set at will.

3. An apparatus according to any of claims 1 and 2, wherein the apparatus further comprises an image processor for processing at least one of the input image signal, non-delayed image signal, delayed image signal and stereoscopic image signal.

4. An apparatus according to any of claims 1, 2 and 3, wherein at least said first, second and third memory means are constituted by a rewritable record medium.

5. An apparatus according to claim 4, wherein said rewritable record medium is formed by a hard disc drive.

6. An apparatus according to claim 1, wherein the apparatus further comprises a local synchronizing signal generating means for generating a local synchronizing signal, a synchronizing signal regenerating means for regenerating a synchronizing signal contained in the input image signal when the synchronizing signal is correct, and supplying said local synchronizing signal when the synchronizing signal contained in the input image signal is not correct or not existent, and a timing signal generating means for producing control signals for controlling said first, second and third memory means in accordance with the synchronizing signal supplied from said synchronizing signal generating means.

7. An apparatus according to claim 1, wherein said first rate is set to a field rate and said second rate is set to a twice of the field rate.

8. An apparatus according to claim 1, wherein the apparatus further comprises a fourth memory means including at least one pair of field memories, one for storing the non-delayed image signal read out of said first memory means and the other for storing the delayed image signal read out of said second memory means, and when a stereoscopic still picture is displayed, the non-delayed and delayed image signals read out of said fourth memory means are supplied to said third memory means, in which the non-delayed and delayed image signals are read out repeatedly.
